Europäisches Patentamt

European Patent Office

Office européen des brevets

(19)

(11) Publication number: **0 002 606**
**B1**

(12)     **EUROPEAN PATENT SPECIFICATION**

(45) Date of publication of patent specification: **21.04.82**     (51) Int. Cl.³: **B 32 B 27/32, B 29 D 9/00**

(21) Application number: **78300803.0**

(22) Date of filing: **13.12.78**

(54) Oriented polypropylene with linear low density polyethylene copolymer coating.

(30) Priority: **14.12.77 US 860350**

(43) Date of publication of application:
**27.06.79 Bulletin 79/13**

(45) Publication of the grant of the patent:
**21.04.82 Bulletin 82/16**

(84) Designated Contracting States:
**BE DE FR GB IT NL**

(56) References cited:
**GB - A - 1 440 317**
**US - A - 3 783 089**

(73) Proprietor: **MOBIL OIL CORPORATION**
**150 East 42nd Street**
**New York New York 10017 (US)**

(72) Inventor: **Weiner, Milton Lawrence**
**77 Shalimar Drive**
**Rochester New York (US)**

(74) Representative: **Jones, Alan John et al.**
**CARPMAELS & RANSFORD 43 Bloomsbury Square**
**London, WC1A 2RA (GB)**

Courier Press, Leamington Spa, England.

## Oriented polypropylene with linear low density polyethylene copolymer coating

The present invention relates to laminar thermoplastic structures characterized by having a base layer and a heat sealable skin layer which may be formed by coextrusion of molten polymer layers through a common die orifice; by adhesively bonding the individual layers together; or by utilizing heat welding techniques to form the desired laminate structure.

In packaging applications using thermoplastic films, for example polypropylene, it is usually necessary to seal the film during the packaging operation. This may be accomplished by using adhesives or by using heat sealing techniques; the particular sealing technique chosen may depend on the properties of the thermoplastic films, the packaging application and the packaging technique being used.

The use of heat sealing techniques on oriented film may result in the loss of orientation in the vicinity of the heat seal. Heat sealed oriented films may therefore exhibit inferior and unacceptable film appearance and properties. In order to heat seal oriented film and obtain acceptable product properties, it may be necessary to apply to the oriented film a coating or laminar layer which has a melting point which is less than the de-orientation temperature of the oriented film to allow heat sealing of the thus coated oriented film at a sealing temperature which is also less than the de-orientation temperature of the oriented film. The application of the heat sealable laminar layer to the base oriented film may be accomplished utilizing various techniques including melt extrusion of the heat sealable layer onto a preformed oriented base web, employing adhesive materials, or heat welding of the individual layers together. Preferably, however, a coextrusion technique may be employed whereby the individual layers when in molten form are brought together inside the confines of either a cast film die or a tubular die and the thus united molten polymer streams are subsequently extruded through a common die orifice to form the laminate base web which may be subsequently oriented.

In the past, coextruded oriented films have been prepared in which the oriented polypropylene core is coated with skins comprising an ethylene-propylene random copolymer containing minor amounts of ethylene. Such laminar films exhibit high heat seal strengths, but because of the relatively high melting point of the copolymer skin, i.e., on the order of from about 141°C (285°F) to about 152°C (305°F), the temperature range over which usable heat seals may be formed, is narrow.

Similarly, in the past, coextruded oriented films have been prepared wherein the core is an oriented polypropylene and the skin layers are comprised of low density polyethylene which has been polymerized utilizing conventional free radical-catalyzed processes. In the case of such laminates, because of the lower melting point of the low density polyethylene skin resin than that of the hereinabove described ethylene-propylene copolymer skins, a broader sealing range is achieved. However, the seal strength provided by skins comprise of such polyethylene homopolymer which has been polymerized by a free radical-catalyzed process are not as high as those provided by an ethylene-propylene random copolymer skin. Moreover, the haze and gloss values of such films are poorer than the haze and gloss values exhibited by oriented polypropylene films.

The present invention provides for the manufacture of an oriented film laminate comprising the steps of bringing together in face to face engagement, preferably while in molten form, a base web such as polypropylene, for example, and a skin resin which has a lower melting point than the polypropylene and subsequently orienting the coextruded base layer at a temperature below the melting point of the base polypropylene film.

Commercial polyethylenes are sold as two distinct products, low density polyethylene and high density polyethylene. Low density polyethylene is manufactured by a high pressure, high temperature, free radical-catalyzed process. Commercially available low (to medium) density polyethylene resins have densities in the range of 0.910—0.939 gram/cc. Sometimes these resins are referred to as branched polyethylenes because the polymer chain contains "branches."

High density polyethylene resins, i.e., resins having densities ranging up to about 0.970 gram/cc are manufactured at lower pressures and temperatures via heterogeneous ionic catalytic processes, for example, those utilizing an organo-metallic or a transition metal oxide catalyst. The products are linear, non-branched polyethylene.

To reduce the density of such high density polyethylene resins below the range of densities that are normally produced in such processes, another alpha-olefine or co-monomer, may be copolymerized with the ethylene. If enough co-monomer is added to the chain to bring the density down to 0.910—0.939 gram/cc, then such products are known as linear, low density polyethylene copolymers. Because of the difference of the structure of the polymer chains, branched low density and linear, low density polyethylene have different properties even though their densities may be similar.

For example a comparison of the properties of film made from a linear low density polyethylene of resin density .922 with those of film made from a high pressure low density polyethylene of resin density .920 shows the former to have a higher modulus, yield strength, tensile strength and elongation at break, impact strength and tear strength than the latter.

Linear low density polyethylene copolymers may be prepared utilizing the process, for example, as described in U.S. Patent Nos. 3,645,992 and 4,011,382, the disclosures of which are incorporated herein by reference. Such copolymers may have densities ranging from about 0.900 up to about 0.925 for low density polymers and from about 0.926 up to about 0.939 for medium density polymers. The co-monomer which is copolymerized with the ethylene is preferably an alpha-olefine having from about 3 up to about 10 carbon atoms. The density of the ethylene copolymer is primarily regulated by the amount of the co-monomer which is copolymerized with the ethylene. In the absence of the co-monomer, the ethylene would homopolymerize in the presence of a stereospecific catalyst to yield homopolymers having a density equal to or above 0.95. Thus, the addition of progressively larger amounts of the co-monomer to the ethylene monomer, results in a progressive lowering, in approximately a linear fashion, of the density of the resultant ethylene copolymer.

British Patent Specification No. 1,440,317 discloses a heat-sealable orientated plastics film comprising an orientated polypropylene film having on at least one surface a heat-sealable layer comprising a predominantly linear random copolymer of ethylene and up to 12 mole per cent of at least one further alpha-olefin having at least three carbon atoms per molecule. The only further alpha-olefines specifically mentioned are propylene and butene-1.

The present invention provides heat sealable thermoplastic laminates which exhibit high heat seal strengths as well as broad heat seal temperature ranges. The laminate comprises an oriented polypropylene film base layer having at least one external skin layer of a linear copolymer of ethylene and octene or 4-methylpentene-1 prepared by polymerization in the presence of a stereo-specific catalyst, said copolymer having a density of from 0.900 up to 0.939 gram per cc, and comprising at least 90% by weight of ethylene.

As hereinbefore described, the present invention is directed to the manufacture of an oriented, preferably biaxially oriented, polypropylene film that is heat sealable over a wide range of temperatures, such films additionally exhibiting a high level of heat seal strength. This may be accomplished by laminating, for example by coextrusion, a polypropylene core layer to one or more surface layers comprising a linear low density copolymer, such copolymer comprising ethylene and octene or 4-methylpentene-1, such monomers having been polymerized in the presence of an organo-metallic catalyste such as, for example, a Ziegler type catalyst commonly employed in the low pressure polymerization process for the production of high density polyethylene homopolymers. Following coextrusion, the resultant laminar sheet may be oriented by any of the means for film orientation common in the prior art.

Although a wide variety of well known prior art techniques may be provided to produce the desired base laminar film and subsequently orient the base film, for the purposes of description of particular embodiments of the present invention, the subject laminar films were prepared in accordance with the following procedure. The ethylene copolymer skin and polypropylene core resins were first separately formed into individual square plaques, 6 cm × 6 cm ($2\frac{3}{8}$ inches × $2\frac{3}{8}$ inches), having a core thickness of about 0.66 mm to 0.71 mm (26 to 28 mils) and skin thickness of about 0.05 mm to 0.25 mm (2 to about 10 mils). A composite, two ply structure was then assembled by joining the particular skin and core materials by heat sealing around the perimeter of the assembly. The purpose of this heat sealing step was simply to ensure that the two plies did not become accidently separated during handling and prior to orientation of the assembly. Biaxial orientation was accomplished by stretching the two ply assembly on a stretching apparatus manufactured by the T. M. Long Company.

This apparatus essentially consists of an oven enclosing a rectangular stretching frame, the opposing sides of which can be caused to move apart while still retaining the rectangular configuration. Each side of the stretching frame is fitted with a plurality of pneumatically actuated pistons whose function it is to grip the sample plaque around its perimeter thereby transmitting to the sample the force required to stretch it. In practice, the sample is introduced into the stretching frame, gripped by the pneumatically actuated pistons and heated to the desired temperature. It is then stretched to the desired extent and at the desired rate in either or both directions. Heat sealing of the oriented laminar film structures was carried out by sealing the non-polypropylene surfaces of two such oriented laminar films together utilizing a sealing pressure of about 34.5 kPa (5 p.s.i.) and a dwell time of 2.0 seconds.

#### Example 1

A 0.25 mm (10 mil) compression molded plaque of a copolymer of ethylene and 4-methylpentene-1 which comprised 2.0% by weight of 4-methypentene-1, the copolymer resin having a melt index of 3.0 and a density of 0.925 gram/cc and which was prepared utilizing a polymerization process which employed a stereospecific catalyst; and a 0.69 mm (27 mil) compression molded plaque of polypropylene resin, having a density of 0.905 gram/cc and a melt flow rate of 4.5 were assembled by heat sealing around the periphery of the plaques as described above. The assembly was subsequently inserted into the T. M. Long stretching apparatus and following preheating for about 1 minute at 156°C (312°F), was first stretched 5 times at a rate of about 25,000 percent per minute and then was stretched 7 times in a perpendicular direction to the first stretch at a rate of about 3,600 percent per minute. The heat seal properties of the film prepared in accordance with Example 1 as well as the properties of the films prepared in accordance with the succeeding examples including the prior art films are set forth in the following Table.

## Example 2

The procedure of Example 1 was followed except that the skin resin was a copolymer of ethylene and about 1.07% by weight of 4-methylpentene-1 having a density of 0.935 gram/cc and a Melt Index of 3.0.

## Example 3

The procedure of Example 2 was followed except that the compression molded plaque of the ethylene-4-methylpentene-1 copolymer skin resin 0.05 mm—0.08 mm (2—3 mils) in thickness.

## Example 4

The procedure of Example 3 was followed except that the skin resin was a copolymer of ethylene and octene-1 which was polymerized with a stereospecific catalyst (.919 density, 6.0 Melt Index).

## Example 5

The procedure of Example 3 was followed except that the skin resin was a copolymer of ethylene and octene-1 which was polymerized with a stereospecific catalyst and which contained 2.5% octene-1 (.921 density, 2.0 Melt Index).

## PRIOR ART EXAMPLES

## Example 6

The procedure of Example 3 was followed except that the skin was a polyethylene homopolymer that was produced by the high pressure, free radical-catalyzed process (.935 density, 3.0 Melt Index).

## Example 7

The procedure of Example 3 was followed except that the skin resin was a polyethylene homopolymer that was produced by the high pressure, free radical-catalyzed process (.920 density, 3.0 Melt Index).

## Example 8

The procedure of Example 1 was followed except that the skin resin comprises a random copolymer of ethylene and propylene (3.0% ethylene, 4.5 Melt Flow Rate, .905 density).

## TABLE 1

| Film of Example | Heat Seal Strength After Sealing At | | | | | |
| --- | --- | --- | --- | --- | --- | --- |
| | 250°F. | 260°F. | 270°F. | 280°F. | 290°F. | 295°F. |
| 1 | 100 | 472 | 495 | 680 | 803 | — |
| 2 | 0 | 175 | 558 | 750 | 1188 | — |
| 3 | 13 | 285 | 453 | 525 | 568 | — |
| 4 | 60 | 394 | 457 | 565 | 652 | — |
| 5 | 15 | 158 | 468 | 505 | 537 | — |
| 6 | 3 | 18 | 235 | 273 | 395 | — |
| 7 | 0 | 8 | 25 | 223 | 215 | — |
| 8 | 0 | 0 | 0 | 0 | 200 | 600 |

In Table 1 there is set forth heat seal data which was obtained on the films produced in accordance with Examples 1 through 8 inclusive. It will be noted that the films of the present invention, i.e., Examples 1 through 5 inclusive, provide a much broader heat seal range than did the prior art film of Example 8, in which the skin layer of the laminate was constituted by an ethylene-propylene copolymer. It will be further noted that the films of the present invention provided not only a broader sealing range but also higher heat seal strengths then the prior art films of Examples 6 and 7 in which the outer laminar skins consisted of polyethylene resins that had been polymerized utilizing the free-radical catalyzed process of the prior art.

## Claims

1. A laminar thermoplastic film comprising an oriented polypropylene base layer having on at least one side thereof a layer of a linear copolymer of ethylene and octene or 4-methylpentene-1 prepared by polymerization in the presence of a stereospecific catalyst, said copolymer having a density of from 0.900 up to 0.939 gram per cc, and comprising at least 90% by weight of ethylene.

2. A laminar thermoplastic film in accordance with Claim 1 wherein said polypropylene is biaxially oriented.

3. A laminar thermoplastic film in accordance with Claim 1 or Claim 2 wherein said layer of copolymer comprises from 2% to 10% of the total thickness of the laminar film.

4. A laminar thermoplastic in accordance with any one of Claims 1 to 3 wherein the laminate is prepared by coextrusion of the individual layers.

## Revendications

1. Film thermoplastique laminaire, caractérisé en ce qu'il comprend une couche de base de polypropylène orienté ayant sur au moins une des faces une couche d'un copolymère linéaire d'éthylène et d'octène ou de 4-méthylpentène-1, préparé par polymérisation en présence d'un catalyseur stéréospécifique, ledit copolymère ayant une densité comprise entre 0,900 et 0,939 g/cm³, et contenant au moins 90% en poids d'éthylène.

2. Film plastique laminaire selon la revendication 1, caractérisé en ce que ledit polypropylène est orienté biaxialement.

3. Film thermoplastique laminaire selon l'une des revendications 1 ou 2, caractérisé en ce que ladite couche de copolymère représente de 2 à 10% de l'épaisseur totale du film laminaire.

4. Film thermoplastique laminaire selon l'une quelconque des revendications 1 à 3, caractérisé en ce que le stratifié est préparé par coextrusion des couches individuelles.

## Patentansprüche

1. Laminares thermoplastisches Filmmaterial, gekennzeichnet durch eine orientierte Poypropylengrundschicht mit auf wenigstens einer Seite einer Schicht eines linearen Copolymeren von Äthylen und Octen oder 4-Methylpenten-1, hergestellt durch Polymerisation in Gegenwart eines stereospezifischen Katalysators, wobei das Copolymere eine Dichte von 0,900 bis zu 0,939 g/cm³ hat und wenigstens 90 Gew.-% Äthylen aufweist.

2. Laminares thermoplastisches Filmmaterial nach Anspruch 1, dadurch gekennzeichnet, daß das Polypropylen biaxial orientiert ist.

3. Laminares thermoplastisches Filmmaterial nach Anspruch 1 oder 2, dadurch gekennzeichnet, daß die Copolymerenschicht 2 % bis 10 % der Gesamtdicke des laminaren Films beträgt.

4. Laminares thermoplastisches Filmmaterial nach einem der Ansprüche 1 bis 3, dadurch gekennzeichnet, daß das Laminat durch Koextrusion der einzelnen Schichten hergestellt worden ist.